# EUROPÄISCHE PATENTSCHRIFT

(11) **EP 2 753 507 B1**
(45) Veröffentlichungstag und Bekanntmachung des Hinweises auf die Patenterteilung: **22.08.2018**
(21) Anmeldenummer: 12754025.0
(22) Anmeldetag: 07.09.2012
(51) Int. Cl.: B60T 8/17, B60T 13/74, B61H 7/06

(54) **VERBESSERTE BREMSUNG FÜR EIN SCHIENENFAHRZEUG**
IMPROVED BRAKING PROCESS FOR A RAIL VEHICLE
FREINAGE AMÉLIORÉ POUR VÉHICULE FERROVIAIRE

(30) Priorität: 09.09.2011 DE 102011113073
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: MAYER, Reinhold, 85757 Karlsfeld (DE); RASEL, Thomas, 85635 Höhenkirchen-Siegertsbrunn (DE); HERDEN, Marc-Oliver, 81377 München (DE); WACH, Joerg-Johannes, 81247 München (DE)
(86) Internationale Anmeldenummer: PCT/EP2012/067518
(87) Internationale Veröffentlichungsnummer: WO 2013/034694

(56) Entgegenhaltungen:
- WO-A1-00/71399
- WO-A2-2010/069520
- US-A- 2 025 889
- US-A- 5 390 990

## Beschreibung

Die vorliegende Erfindung betrifft eine Steuereinrichtung für eine Bremsanlage für ein Schienenfahrzeug mit mindestens einer ersten und einer zweiten Bremseinrichtung sowie eine Bremsanlage für ein Schienenfahrzeug, ein Schienenfahrzeug und ein Verfahren zum Steuern einer Bremsanlage eines Schienenfahrzeugs.

Zum Bremsen von Schienenfahrzeugen werden unterschiedliche Arten von Bremsen verwendet. Als regelmäßig einzusetzende Betriebsbremsen werden in der Regel sogenannte kraftschlussabhängige Bremsen verwendet. Derartige kraftschlussabhängige Bremsen übertragen eine Bremskraft über einen Kontakt zwischen Rad und Schiene. Ein solcher Kontakt ist allerdings nur beschränkt zur Aufnahme von Bremskraft in der Lage. Die Aufnahmefähigkeit für Bremskraft über einen Rad-Schiene-Kontakt ist durch einen Kraftschluss zwischen Rad und Schiene definiert, der durch einen Kraftschlussbeiwert parametrisiert sein kann. Wird durch eine Betätigungskraft zum Bremsen eines Rades die durch den Kraftschluss übertragbare Bremskraft überschritten, kann das Rad ins Gleiten oder Blockieren geraten. Um dies zu verhindern, verfügen Bremsanlagen von Schienenfahrzeugen in der Regel über Gleitschutzeinrichtungen, die eine Betätigungskraft für eine Bremse zurückzunehmen vermögen, wenn der Kraftschluss überschritten ist. Darüber hinaus kann bei Überschreiten des Kraftschlusses eine vorgesehene Gesamtbremskraft zur Bremsung des Schienenfahrzeugs nicht aufgebracht werden, wodurch sich ein Bremsweg verlängern kann. Der Kraftschluss hängt entscheidend von den Reibbedingungen zwischen Rad und Schiene ab und kann sich insbesondere bei längeren Schienenfahrzeugen von Rad zu Rad aufgrund unterschiedlicher Schienenbedingungen unterscheiden.

Eine Steuereinrichtung für eine Bremsanlage eines Schienenfahrzeugs, wobei die Bremsanlage mindestens eine erste Bremseinrichtung und eine zweite Bremseinrichtung aufweist, die während einer Bremsung mit einer Betätigungskraft betätigbar sind, wobei die erste Bremseinrichtung und die zweite Bremseinrichtung kraftschlussabhängige Bremseinrichtungen sind, ist aus der US 5,390,990 bekannt.

Eine Steuereinrichtung mit den Merkmalen des Oberbegriffs des Anspruchs 1 ist aus der WO2010/069520 A2 bekannt.

Eine Aufgabe der vorliegenden Erfindung besteht darin, eine verbesserte Bremsung durch eine Bremsanlage mit kraftschlussabhängigen Bremseinrichtungen zu ermöglichen.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug einen oder mehrere Wagen mit oder ohne eigenen Antrieb und/oder ein Zugfahrzeug in beliebiger Kombination bezeichnen. Ein Schienenfahrzeug kann insbesondere Triebwagen aufweisen. Es ist vorstellbar, dass an einem Wagen eines Schienenfahrzeugs ein oder mehrere Drehgestelle vorgesehen sind, an denen jeweils ein oder mehrere Radachsen vorgesehen sein können. Eine Radachse kann jeweils zwei Räder starr miteinander verbinden oder zur einzelnen Aufhängung eines Rades dienen. Eine Bremsanlage kann mehrere Bremseinrichtungen aufweisen, insbesondere mehrere kraftschlussabhängige Bremseinrichtungen. Eine kraftschlussabhängige Bremseinrichtung vermag es, eine von ihr zum Bremsen ausgeübte Bremskraft über einen Rad-Schiene-Kontakt auf die Schiene zu übertragen. Kraftschlussabhängige Bremseinrichtungen können insbesondere Reibbremseinrichtungen wie Klotzbremsen, Scheibenbremsen oder kombinierte Klotz-Scheibenbremsen umfassen. Reibbremseinrichtungen vermögen es, durch Ausüben einer Betätigungskraft Reibelemente in reibenden Kontakt miteinander zu bringen, um das Schienenfahrzeug und/oder ein Rad des Schienenfahrzeugs abzubremsen. Eine Reibbremseinrichtung kann ein Reibpaar aufweisen. Ein Reibpaar umfasst dabei mindestens zwei Reibelemente, die bei einer Betätigung miteinander in Kontakt gebracht werden. Ein Reibpaar kann beispielsweise als Reibelemente einen Bremsbelag eines Bremsklotzes und eine Lauffläche eines Rades oder eine Bremsscheibe und einen oder mehrere Bremsbeläge einer Scheibenbremszange umfassen. Eine einzelne Reibbremseinrichtung kann zum Bremsen eines einzelnen Rades oder einer einzelnen Radachse ausgebildet sein. Eine Bremseinrichtung kann zum Bremsen mindestens eines zugeordneten Rades ausgebildet sein, über welches sie eine Bremskraft auf die Schiene zu übertragen vermag. Allgemein kann eine Bremseinrichtung ein oder mehrere Reibbremseinrichtungen zum Bremsen eines Rades und/oder einer Radachse und/oder der einem Drehgestell zugeordneten Räder oder Radachsen aufweisen, beispielsweise ein oder mehrere Bremsscheiben und zugeordnete Bremszangen oder ein oder mehrere Bremsklötze. Es kann vorgesehen sein, dass eine Bremseinrichtung einen oder mehrere Krafterzeuger aufweist, die zum Erzeugen einer Betätigungskraft zur Bremsung eines zugeordneten Rades, einer zugeordneten Radachse, der an einem Drehgestell angeordneten Räder oder Radachsen oder der an einem Wagen angebrachten Räder oder Radachsen vorgesehen sein können. Der oder die Krafterzeuger können separat zur Bremsung eines Rades oder einer Radachse ansteuerbar und/oder mit einem Bremsdruck oder einem Bremsstrom versorgbar sein. Eine zum Bremsen eines Rades oder Schienenfahrzeugs gegenüber der Schiene wirkende Kraft kann als Bremskraft bezeichnet werden. Eine auf das Schienenfahrzeug wirkende Gesamtbremskraft ergibt sich als Summe der von allen wirkenden Bremseinrichtungen und bremsenden Effekten bereitgestellten einzelnen Bremskräfte. Eine zum Bremsen auf eine Reibbremseinrichtung ausgeübte Kraft kann als Betätigungskraft bezeichnet werden. Eine Betätigungskraft kann beispielsweise durch eine Bremszange ausgeübt werden, welche einen oder mehrere Bremsbeläge in reibenden Kontakt mit einer Bremsscheibe einer Scheibenbremse bringt. Auch eine Kraft, welche einen Bremsklotz in reibenden Kontakt mit einer Radlauffläche bringt, kann als Betätigungskraft angesehen werden. Die zum Betätigen einer Bremseinrichtung ausgeübte Betätigungskraft kann durch die Summe der zum Bremsen eines gleichen Rades oder einer gleichen Radachse auf Reibbremseinrichtungen der Bremseinrichtung ausgeübten Betätigungskräfte definiert sein. Es ist auch vorstellbar, dass die zum Betätigen einer Bremseinrichtung ausgeübte Betätigungskraft durch die Summe der zum Bremsen der Räder oder Radachsen eines Drehgestells auf Reibbremseinrichtungen der Bremseinrichtung ausgeübten Betätigungskräfte definiert ist. Durch Reibungseffekte innerhalb einer Reibbremseinrichtung und zwischen Rad und Schiene wird nicht die gesamte Betätigungskraft in eine Bremskraft umgesetzt. Zum Erzeugen einer Betätigungskraft kann eine Bremseinrichtung mindestens einen ihr zugeordneten Krafterzeuger oder Kraftumsetzer aufweisen. Ein derartiger Krafterzeuger kann beispielsweise ein mit einem Bremsdruck versorgter Druckzylinder sein oder ein elektrisch betätigter Aktuator. Wird ein Bremsdruck pneumatisch bereitgestellt, liegt eine pneumatische Bremseinrichtung vor. Wird der Bremsdruck hydraulisch bereitgestellt, handelt es sich um eine hydraulische Bremseinrichtung. Wird ein elektrisch betätigbarer Aktuator mit einem Bremsstrom versorgt, welchen er in eine Betätigungskraft umsetzt, handelt es sich um eine elektrische oder elektromechanische Bremseinrichtung. Es kann vorgesehen sein, dass zur Steuerung eines Bremsdrucks elektrisch ansteuerbare Ventileinrichtungen vorgesehen sind, etwa Magnetventile. Eine Bremseinrichtung mit einer derartigen elektrisch ansteuerbaren Ventileinrichtung kann als elektropneumatische oder elektrohydraulische Bremseinrichtung bezeichnet werden. Eine bestimmte Bremseinrichtung kann von einer weiteren Bremseinrichtung dadurch unterschieden sein, dass sie über ein anderes Rad, eine andere Radachse, andere Räder und/oder andere Radachsen als die weitere Bremseinrichtung eine Bremskraft auf die Schiene zu übertragen vermag. Es ist auch vorstellbar, dass eine bestimmte Bremseinrichtung durch über eine gemeinsame Steuereinheit, wie etwa eine gemeinsame Steuerventileinrichtung, angesteuerte und/oder mit einem gemeinsamen Bremsdruck versorgte Krafterzeuger definiert ist. Das Ansteuern einer Bremseinrichtung kann das Versorgen mit einem bestimmten Bremsdruck oder Bremsstrom und/oder das Ansteuern derart bedeuten, dass eine bestimmte Betätigungskraft und/oder Bremskraft ausgeübt wird. Ein derartiges Ansteuern kann durch eine Steuereinrichtung, insbesondere eine elektronische Steuereinrichtung erfolgen. Beispielsweise kann eine elektronische Steuereinrichtung dazu ausgebildet sein, elektrisch ansteuerbare Ventileinrichtungen einer Bremseinrichtung derart anzusteuern, dass einem oder mehreren Krafterzeugern jeweils ein bestimmter Bremsdruck zugeführt wird, den diese Krafterzeuger jeweils in eine Betätigungskraft umzusetzen vermögen. Es ist vorstellbar, dass Krafterzeuger einer oder mehrerer Bremseinrichtungen derart angesteuert werden, dass sie jeweils eine gleiche Betätigungskraft ausüben, oder dass sie unterschiedliche Betätigungskräfte ausüben. Dazu kann beispielsweise vorgesehen sein, dass Krafterzeuger oder Reibbremseinrichtungen einzeln oder gruppenweise separat ansteuerbar sind. Es ist insbesondere vorstellbar, dass Krafterzeugern einer pneumatischen oder hydraulischen Bremseinrichtung jeweils Steuerventileinrichtungen zugeordnet sind, über welche sich ein mehreren Krafterzeugern zugeführter Hauptbremsdruck jeweils individuell für den einzelnen Krafterzeuger oder für eine Gruppe von Krafterzeugern variieren lässt. Insbesondere können Ablassventile vorgesehen sein, über welche ein an einem Krafterzeuger anliegender Bremsdruck verringert werde kann. Derartige Ablassventile können Teil einer Gleitschutzeinrichtung sein.

Die vorliegende Erfindung betrifft eine Steuereinrichtung für eine Bremsanlage für ein Schienenfahrzeug, wobei die Bremsanlage mindestens eine erste Bremseinrichtung und eine zweite Bremseinrichtung aufweist, die während einer Bremsung mit einer Betätigungskraft betätigbar sind. Die erste Bremseinrichtung und die zweite Bremseinrichtung sind kraftschlussabhängige Bremseinrichtungen. Die Steuereinrichtung vermag es, ein Kraftschlussmangelsignal zu empfangen oder zu erzeugen, welches für die erste und/oder zweite Bremseinrichtung einen nicht ausreichenden Kraftschluss signalisiert. Ferner ist die Steuereinrichtung dazu ausgebildet, während einer Bremsung bei Vorliegen eines Kraftschlussmangelsignals hin die erste und/oder zweite Bremseinrichtung mit einer erhöhten Betätigungskraft zu betätigen. Somit ist erfindungsgemäß vorgesehen, dass auf ein Kraftschlussmangelsignal hin eine erhöhte Betätigungskraft auf zumindest eine der Bremseinrichtungen der Bremsanlage ausgeübt wird. Dabei wird davon ausgegangen, dass nicht alle Räder und/oder zugeordnete Bremseinrichtungen einen mangelnden Kraftschluss aufweisen, sondern dass zumindest ein Rad und/oder eine zugeordnete Bremseinrichtung über Kraftschlussreserven verfügt, die es ermöglichen, eine erhöhte Bremskraft aufzunehmen. Somit kann durch diese Bremseinrichtung eine zusätzliche Bremskraft erzeugt werden, welche die aufgrund des Kraftschlussmangels nicht übertragbare Bremskraft ausgleicht. Die erste Bremseinrichtung kann dabei zum Bremsen eines ersten Rades ausgebildet sein, welches einer ersten Radachse zugeordnet sein kann. Die zweite Bremseinrichtung kann zum Bremsen eines zweiten Rades ausgebildet sein, welches einer zweiten Radachse zugeordnet ist. Das erste Rad und das zweite Rad können unabhängig voneinander drehfähig sein, etwa indem sie nicht auf einer gemeinsamen Radachse angeordnet sind. Es ist vorstellbar, dass die erste Radachse an einem anderen Drehgestell vorgesehen ist als die zweite Radachse. Allgemein kann die erste Bremseinrichtung zum Bremsen eines oder mehrerer Räder eines ersten Drehgestells ausgebildet sein. Die zweite Bremseinrichtung kann zum Bremsen eines oder mehrerer Räder eines zweiten Drehgestells ausgebildet sein. Es kann vorgesehen sein, dass die Bremseinrichtungen während einer Bremsung vor Vorliegen des Kraftschlussmangelsignals mit einer Betätigungskraft betätigt werden, welche geringer ist als die erhöhte Betätigungskraft. Eine Erhöhung der Betätigungskraft, mit welcher die erste und/oder zweite Bremseinrichtung betätigt wird, kann beispielsweise dadurch erreicht werden, dass durch die Steuereinrichtung eine Betätigung einer oder mehrerer bereits betätigter Reibbremseinrichtungen der jeweiligen Bremseinrichtung mit einer erhöhten Kraft angesteuert wird. Dazu kann beispielsweise ein entsprechender erhöhter Bremsdruck oder Bremsstrom angesteuert werden. Alternativ oder zusätzlich kann vorgesehen sein, dass eine oder mehrere Reibbremseinrichtungen oder Krafterzeuger der Bremseinrichtung betätigt werden, welche bisher nicht aktiviert oder betätigt waren. Zumindest eine der ersten und zweiten Bremseinrichtungen kann dabei eine oder mehrere zusätzliche Reibbremseinrichtungen und/oder Krafterzeuger aufweisen. Es ist vorstellbar, dass die erste und die zweite Bremseinrichtung eine unterschiedliche Anzahl von Reibbremseinrichtungen aufweisen. Dabei kann vorgesehen sein, dass die Bremseinrichtung mit der höheren Anzahl von Reibbremseinrichtung zur Betätigung mit einer erhöhten Betätigungskraft angesteuert wird. Die entsprechende Ansteuerung kann durch die Steuereinrichtung erfolgen, beispielsweise basierend auf einer Bremsanforderung. Es ist vorstellbar, dass die Ansteuerung basierend auf einer Bremsanforderung und/oder die Betätigung mit einer entsprechenden Betätigungskraft durch eine andere Steuereinrichtung erfolgt, beispielsweise durch eine Bremssteuereinrichtung. Es versteht sich, dass ein Kraftschlussmangelsignal nur bereitgestellt wird, wenn tatsächlich ein nicht ausreichender Kraftschluss bei mindestens einem Rad vorliegt. Allgemein kann vorgesehen sein, dass die Bremseinrichtungen vor dem Vorliegen des Kraftschlussmangelsignals aufgrund einer Ansteuerung mit einer ersten Betätigungskraft betätigt sind, welche niedriger ist als die erhöhte Betätigungskraft. Ein Kraftschlusssignal kann als vorliegend gelten, wenn es durch die Steuereinrichtung erzeugt und/oder empfangen wurde. Die Bremsanlage kann ein Gleitschutzsystem aufweisen, welches es vermag, bei mangelndem Kraftschluss für ein Rad und/oder eine zugeordnete Bremseinrichtung die zugeordnete Bremseinrichtung derart anzusteuern, dass ihre Betätigungskraft so weit verringert wird, dass ein Gleiten oder Blockieren des zugeordneten Rades oder der zugeordneten Räder verhindert wird und/oder das die ausgeübte Bremskraft so weit verringert wird, dass sie über die Schiene aufgenommen werden kann. Allgemein kann ein Kraftschlussmangelsignal angeben, dass nicht ausreichend Kraftschluss für ein Rad vorliegt, um die von einer zum Bremsen des Rades ausgebildeten Bremseinrichtung ausgeübte Betätigungskraft in ausreichendem Maße in eine Bremskraft umzusetzen, um eine Bremsanforderung zu erfüllen. Ein solcher Fall bedeutet, dass für eine zur Bremsung des Rades vorgesehene Bremseinrichtung kein ausreichender Kraftschluss vorliegt. Das Kraftschlussmangelsignal kann ein Signal sein, welches basierend auf einer Kraftschlussmessung erzeugt wird. Das Kraftschlussmangelsignal kann einen Kraftschluss quantitativ angeben und/oder qualitativ auf einen mangelnden Kraftschluss hinweisen. Es ist vorstellbar, dass das Kraftschlussmangelsignal auf einem Vergleich zwischen einer Ist-Verzögerung des Schienenfahrzeugs und einer Soll-Verzögerung basiert. Der Vergleich kann durch die Steuereinrichtung basierend auf entsprechenden Signalen durchgeführt werden, welche durch geeignete Sensor- oder Steuereinrichtungen bereitgestellte sein können, um das Kraftschlussmangelsignal zu erzeugen. Es ist auch vorstellbar, dass ein entsprechendes Kraftschlussmangelsignal der Steuereinrichtung übermittelt wird. Allgemein kann vorgesehen sein, dass die Steuereinrichtung zum Erzeugen eines Kraftschlussmangelsignals basierend auf einen Kraftschluss betreffenden Daten ausgebildet ist und/oder es vermag, ein basierend auf einen Kraftschluss betreffenden Daten erzeugtes Kraftschlussmangelsignal zu empfangen. Die Steuereinrichtung kann zum Ansteuern der mindestens einen ersten Bremseinrichtung und einer zweiten Bremseinrichtung verbunden oder verbindbar sein. Das Betätigen einer Bremseinrichtung mit einer bestimmten Betätigungskraft kann das Ansteuern von Elementen der Bremsanlage und/oder der Bremseinrichtung derart umfassen, dass ein oder mehrere Krafterzeuger der Bremseinrichtung die bestimmte Betätigungskraft bereitstellen und/oder dass eine bestimmte, etwa eine erhöhte, Betätigungskraft bereitgestellt wird. Eine derartige Ansteuerung kann durch eine geeignete Steuereinrichtung erfolgen, insbesondere durch die zum Empfangen und/oder Erzeugen des Kraftschlussmangelsignals ausgebildete Steuereinrichtung. Dazu kann beispielsweise vorgesehen sein, dass die Steuereinrichtung eine oder mehrere Steuerventileinrichtungen derart ansteuert, dass auf den oder die Krafterzeuger ein bestimmter Bremsdruck wirkt, um eine Betätigungskraft zu erzeugen. Das Ansteuern einer Bremseinrichtung durch eine Steuereinrichtung kann das Ansteuern der Bremseinrichtung zum Bereitstellen eines bestimmten Bremsdrucks oder zum Erzeugen einer bestimmten Betätigungskraft und/oder Bremskraft umfassen, beispielsweise durch eine elektronische Steuereinrichtung wie einen Bremskraftmanager. Auch das Ansteuern einer Bremseinrichtung durch eine Gleitschutzeinrichtung oder einen Gleitschutzrechner, um einen Bremsdruck und/oder eine Betätigungskraft zu verringern, kann als Ansteuern durch eine Steuereinrichtung angesehen werden, wobei die Gleitschutzeinrichtung oder der Gleitschutzrechner der Steuereinrichtung entsprechen. Ferner kann die Steuereinrichtung dazu ausgebildet sein, ein Kraftschlussmangelsignal von einer anderen Steuereinrichtung oder einer Sensoreinrichtung zu empfangen. Eine Betätigungskraft kann als erhöht angesehen werden, wenn sie bei gleicher Bremsanforderung höher ist als eine zum Erfüllen der Bremsanforderung anzusteuernde oder angesteuerte Betätigungskraft. Zum Erzeugen des Kraftschlussmangelsignals kann ein Kraftschlusssensor vorgesehen sein. In diesem Zusammenhang kann beispielsweise ein Raddrehzahlsensor als Kraftschlusssensor angesehen werden, da sich aus Raddrehzahldaten ein Radschlupf bestimmen lässt, aus dem sich auf einen mangelnden Kraftschluss oder, beispielsweise bei Kenntnis der herrschenden Bremskräfte und/oder Betätigungskräfte, auf einen Kraftschlusswert schließen lässt. Es ist vorstellbar, dass die Steuereinrichtung dazu ausgebildet ist, ein einen Kraftschluss quantitativ beschreibendes Signal als Kraftschlussmangelsignal zu interpretieren, wenn der angegebene Kraftschluss unter einem vorgegebenen Kraftschluss liegt. Es kann vorgesehen sein, dass ein Kraftschlussmangel dann vorliegt und/oder ein Kraftschlussmangelsignal dann erzeugt wird, wenn für mindestens ein Rad und/oder mindestens eine einem Rad zugeordnete Bremseinrichtung der Kraftschluss nicht ausreicht, um eine Bremsanforderung oder einen Bremssollwert umzusetzen. Eine Bremsanforderung oder ein Bremssollwert können beispielsweise über eine externe Ansteuerung an die Steuereinrichtung bereitgestellt werden, beispielsweise durch Eingabe eines Zugführers oder durch eine übergeordnete oder nebengeordnete Steuereinrichtung. Es versteht sich, dass die Bremsanlage mehr als zwei kraftschlussabhängige Bremseinrichtungen aufweisen kann. Es ist vorstellbar, dass die Steuereinrichtung dazu ausgebildet ist, basierend auf einem Kraftschlussmangelsignal eine fahrzeugweite Ansteuerung entsprechender kraftschlussabhängiger Bremseinrichtungen durchzuführen, insbesondere Bremseinrichtungen eines gemeinsamen Typs. Bremseinrichtungen können einem gemeinsamen Typ angehören, wenn ihre Betätigungskraft auf gleiche Art erzeugt wird und/oder sie eine Betätigungskraft auf gleiche Art in eine Bremskraft umzusetzen vermögen. Insbesondere gehören Reibbremseinrichtungen wie Scheibenbremsen und Klotzbremsen jeweils zum gleichen Typ. Eine Ansteuerung kann als auf einem Kraftschlussmangelsignal basierend angesehen werden, wenn sie auf einen Empfang oder ein Erzeugen eines Kraftschlussmangelsignals hin erfolgt, also dann, wenn ein Kraftschlusssignal vorliegt. Die Steuereinrichtung kann dazu ausgebildet sein, bei Vorliegen eines Kraftschlussmangelsignals eine oder mehrere dieser Bremseinrichtungen mit einer erhöhten Betätigungskraft ansteuern. Es ist vorstellbar, dass die Steuereinrichtung es vermag, bestimmte Bremseinrichtungen, deren zugeordnete Räder über einen höheren Kraftschluss verfügen als andere Bremseinrichtungen, mit einer erhöhten Betätigungskraft zu betätigen, während die anderen Bremseinrichtungen mit unveränderter und/oder niedrigerer Betätigungskraft betätigt werden. Die Steuereinrichtung kann mehrere Komponenten umfassen, beispielsweise mehrere zur Datenübertragung miteinander verbundene Steuergeräte. Es kann vorgesehen sein, dass die Steuereinrichtung ein Gleitschutzrechner, ein Bremsrechner, ein Bremskraftmanager oder ein Zugrechner ist oder mehrere dieser Einrichtungen umfasst. Es ist vorstellbar, dass die Steuereinrichtung dazu ausgebildet ist, Kraftschlussdaten bezüglich eines oder mehrerer Räder und/oder einer oder mehrerer Bremseinrichtungen zu empfangen und basierend auf den Kraftschlussdaten die Bremsanlage und/oder Bremseinrichtungen anzusteuern. Kraftschlussdaten können beispielsweise vermittels einer geeigneten Sensoreinrichtung ermittelt und bereitgestellt sein. Allgemein kann es zweckmäßig sein, die Steuereinrichtung dazu auszubilden, eine Bremseinrichtung nur mit einer erhöhten Betätigungskraft zu betätigen, wenn die Bremseinrichtung und/oder die zugeordneten Räder es vermögen, die erhöhte Betätigungskraft in eine Bremskraft umzusetzen. Dazu kann eine Überwachung des Kraftschlusses entsprechender Räder vorgesehen sein. Insbesondere kann vorgesehen sein, dass die Steuereinrichtung basierend auf dem Kraftschlussmangelsignal eine Zuordnung vorzunehmen vermag, welche Bremseinrichtung aufgrund mangelnden Kraftschlusses nicht die gewünschte Bremskraft auf die Schiene zu übertragen vermag. Zweckmäßigerweise kann die Steuereinrichtung dazu ausgebildet sein, entsprechende Bremseinrichtungen nicht mit erhöhter Betätigungskraft zu betätigen. Alternativ oder zusätzlich kann vorgesehen sein, dass die Steuereinrichtung für eine oder mehrere Bremseinrichtungen und/oder Räder kraftschlusserhöhende Maßnahmen ansteuert. Allgemein kann es zweckmäßig sein, dass die Steuereinrichtung dazu ausgebildet ist, eine Betätigung mit erhöhter Betätigungskraft für Bremseinrichtungen anzusteuern, bei denen durch Maßnahmen wie beispielsweise einer Sandung eine Umsetzung der erhöhten Betätigungskraft in eine Bremskraft zu erwarten ist.

Die Steuereinrichtung kann dazu ausgebildet ein sein, die erste und/oder zweite Bremseinrichtung mit einer erhöhten Betätigungskraft zu betätigen, während das Kraftschlussmangelsignal vorliegt. Somit kann insbesondere auf einen aktuell vorliegenden Kraftschlussmangel reagiert werden. Dabei kann davon ausgegangen werden, dass das Kraftschlussmangelsignal in Echtzeit dann erzeugt wird, wenn tatsächlich an mindestens einem Rad ein mangelnder Kraftschluss vorliegt.

Es kann zweckmäßig sein, wenn die Steuereinrichtung dazu ausgebildet ist, eine erhöhte Betätigungskraft durch Erhöhen eines Bremsdrucks anzusteuern. Dies ermöglicht auf besonders einfache Art, eine erhöhte Betätigungskraft für druckbetätigte Bremsvorrichtungen bereitzustellen. Ein erhöhter Bremsdruck kann dabei für eine oder mehrere Bremseinrichtungen bereitgestellt sein.

Bei einer Weiterbildung kann vorgesehen sein, dass die Steuereinrichtung dazu ausgebildet ist, bei Vorliegen des Kraftschlussmangelsignals mindestens eine Partikelstreuanlage anzusteuern, um kraftschlusserhöhende Partikel auf eine Schiene auszubringen. Durch Ansteuerung der mindestens einen Partikelstreuanlage kann somit ein Kraftschluss zumindest für einige Räder erhöht werden. Eine Partikelstreuanlage kann eine Ausbringvorrichtung zum Ausbringen von Partikeln auf die Schiene aufweisen. Die Partikel können beispielsweise Sand oder keramische Materialien umfassen. Es ist vorstellbar, dass die Partikelstreuanlage einem oder mehreren Rädern zugeordnet ist, deren Kraftschluss sie durch Ausbringen von Partikeln zu erhöhen vermag. Eine Partikelstreuanlage kann jeweils Rädern zugeordnet sein, die in Fahrtrichtung des Schienenfahrzeugs hinter ihr angeordnet sind. Dabei kann die Steuereinrichtung dazu ausgebildet sein, die Zuordnung einer Partikelstreuanlage einer Fahrtrichtung anzupassen. Das Ansteuern der Partikelstreuanlage kann bei Vorliegen des Kraftschlussmangelsignals erfolgen, bevor eine erhöhte Betätigungskraft angesteuert wird. Somit kann eine zweistufige Reaktion auf ein Kraftschlussmangelsignal erfolgen. In der ersten Stufe ist eine Ansteuerung mindestens einer Partikelstreuanlage vorgesehen, um einen Kraftschluss für zumindest einige Räder zu verbessern. Reicht die Partikelstreuanlage nicht aus, kann in einer zweiten Stufe zusätzlich eine Erhöhung der Betätigungskraft für eine oder mehrere Bremseinrichtungen erfolgen. Es ist auch vorstellbar, dass die Ansteuerung der Partikelstreuanlage und die Ansteuerung einer erhöhten Betätigungskraft im Wesentlichen gleichzeitig erfolgen. Es ist auch vorstellbar, dass die Steuereinrichtung als alternative oder zusätzliche kraftschlusserhöhende Maßnahme eine Schienenreinigungseinrichtung ansteuert und/oder eine Magnetschienenbremseinrichtung zur Reinigung einer Schiene ansteuert.

Es kann vorgesehen sein, dass die Steuereinrichtung dazu ausgebildet ist, eine Bremseinrichtung mit einer erhöhten Betätigungskraft anzusteuern, die ein Rad zu bremsen vermag, welches der Partikelstreuanlage zugeordnet ist. Somit kann sichergestellt werden, dass über das entsprechende Rad eine erhöhte Betätigungskraft auch in erhöhte Bremskraft umgesetzt werden kann. Die Bremseinrichtung kann die erste und/oder zweite Bremseinrichtung sein.

Es ist vorstellbar, dass die Steuereinrichtung dazu ausgebildet ist, zur Betätigung der ersten Bremseinrichtung und/oder der zweiten Bremseinrichtung mit einer erhöhten Betätigungskraft mindestens einen zusätzlichen Krafterzeuger zu betätigen. Ein zusätzlicher Krafterzeuger kann insbesondere dazu vorgesehen sein, die zur Bremsung eines Rades oder einer Radachse durch die Bremseinrichtung ausgeübte Betätigungskraft und/oder wirkende Bremskraft zu erhöhen. Ein zusätzlicher Krafterzeuger kann dazu vorgesehen sein, eine zusätzliche Betätigungskraft auf ein Reibelement auszuüben, auf welches bereits eine Betätigungskraft ausgeübt wird. Es ist auch vorstellbar, dass einem zusätzlichen Krafterzeuger mindestens ein zusätzliches Reibelement zugeordnet ist, beispielsweise ein zusätzlicher Bremsklotz. Ein zusätzliches Reibelement kann bei Betätigung des zusätzlichen Krafterzeugers in reibenden Kontakt mit einem abgebremsten Rad gebracht werden, um die gesamte zur Bremsung eines Rades ausgeübte Betätigungskraft zu erhöhen. Es kann vorgesehen sein, dass während einer normalen Bremsung, wenn keine erhöhte Betätigungskraft ausgeübt wird, ein zusätzlicher Krafterzeuger unbetätigt ist, insbesondere nicht mit einem Bremsdruck versorgt wird. Der ersten und/oder zweiten Bremseinrichtung kann jeweils mindesten ein zusätzlicher Krafterzeuger und/oder eine zusätzliche Reibbremseinrichtung zugeordnet sein. Allgemein kann vorgesehen sein, dass einer oder mehreren bestimmten Bremseinrichtungen mindestens ein zusätzlicher Krafterzeuger und/oder eine zusätzliche Reibbremseinrichtung zugeordnet ist. Dabei muss nicht jeder Bremseinrichtung ein zusätzlicher Krafterzeuger zugeordnet sein. Der zusätzliche Krafterzeuger kann für eine druckbetätigte Bremseinrichtung mit dem gleichen Bremsdruck beaufschlagbar sein wie ein oder mehrere weitere Krafterzeuger der entsprechenden Bremseinrichtung. Somit kann die Auslegung der Drucksteuerung und der Druckleitungssysteme gegenüber einem herkömmlichen System gleich bleiben, während eine erhöhte Betätigungskraft zur Verfügung gestellt wird. Darüber hinaus lassen sich bereits existierende Bremsanlagen leicht mit zusätzlichen Krafterzeugern und beispielsweise geringfügigen Änderungen am Gleitschutzsystem nachrüsten. Es ist vorstellbar, dass einem zusätzlichen Krafterzeuger ein zusätzliches Steuerventil zugeordnet ist, über welches der zusätzliche Krafterzeuger mit einem Bremsdruck versorgbar ist. Die Steuereinrichtung kann dazu ausgebildet sein, dieses Steuerventil basierend auf dem Kraftschlussmangelsignal derart anzusteuern, dass der zusätzliche Krafterzeuger mit Bremsdruck versorgt wird. Insbesondere kann vorgesehen sein, dass das zusätzliche Steuerventil bei Vorliegen oder nur bei Vorliegen des Kraftschlussmangelsignals durch die Steuereinrichtung zum Bereitstellen eines Bremsdrucks für den zusätzlichen Krafterzeuger angesteuert wird.

Das Kraftschlussmangelsignal kann von einer Gleitschutzeinrichtung des Schienenfahrzeugs bereitgestellt sein. Eine derartige Gleitschutzeinrichtung ist in der Regel dazu ausgebildet, einen Kraftschlussmangel zu erkennen und ein entsprechendes Signal abzugeben. Somit können schon vorhandene Systeme eines Schienenfahrzeugs weiter verwendet werden. Das Kraftschlussmangelsignal kann durch ein Signal repräsentiert sein, welches das Auslösen einer Gleitschutzeinrichtung angibt.

Die vorliegende Erfindung betrifft auch eine Bremsanlage für ein Schienenfahrzeug mit einer ersten und zweiten kraftschlussabhängigen Bremseinrichtung und einer hierin beschriebenen Steuereinrichtung, wobei die erste und zweite Bremseinrichtung nach Maßgabe der Steuereinrichtung mit einer Betätigungskraft betätigbar sind.

Die Erfindung betrifft außerdem ein Schienenfahrzeug mit einer hierin beschriebenen Bremsanlage und/oder einer hierin beschriebenen Steuereinrichtung.

Die Erfindung betrifft außerdem ein Verfahren zum Steuern einer Bremsanlage eines Schienenfahrzeugs durch eine Steuereinrichtung, wobei die Bremsanlage mindestens eine erste Bremseinrichtung und eine zweite Bremseinrichtung umfasst. Die erste und die zweite Bremseinrichtung sind kraftschlussabhängige Bremseinrichtungen und während einer Bremsung mit einer Betätigungskraft betätigbar. Das Verfahren umfasst die Schritte des Empfangens und/oder Erzeugens, durch die Steuereinrichtung, eines Kraftschlussmangelsignals, welches für die erste und/oder zweite Bremseinrichtung einen nicht ausreichenden Kraftschluss signalisiert, und des Betätigens, durch die Steuereinrichtung, während einer Bremsung, bei Vorliegen eines Kraftschlussmangelsignals, der ersten und/oder zweiten Bremseinrichtung mit einer erhöhten Betätigungskraft. Die Steuereinrichtung kann eine hierin beschriebene Steuereinrichtung sein. Die Bremsanlage kann eine hierin beschriebene Bremsanlage sein. Das Verfahren kann vor dem Schritt des Empfangens des Kraftschlussmangelsignals einen Schritt des Ansteuerns der ersten und zweiten Bremseinrichtung zum Bremsen mit einer bestimmten ersten Betätigungskraft umfassen. Die erhöhte Betätigungskraft kann größer sein als die erste Betätigungskraft. Die Steuereinrichtung oder eine andere Steuereinrichtung kann zum Ansteuern zum Bremsen mit einer bestimmten ersten Betätigungskraft ausgebildet sein. wobei die Steuereinrichtung dazu ausgebildet ist, die mindestens erste und/oder zweite Bremseinrichtung mit einer erhöhten Betätigungskraft zu betätigen, während das Kraftschlussmangelsignal vorliegt. Die Steuereinrichtung kann eine erhöhte Betätigungskraft durch Erhöhen eines Bremsdrucks ansteuern. Es ist vorstellbar, dass die Steuereinrichtung bei Vorliegen des Kraftschlussmangelsignals mindestens eine Partikelstreuanlage ansteuert, um kraftschlusserhöhende Partikel auf eine Schiene auszubringen. Bei einer Weiterbildung kann die Steuereinrichtung eine Bremsseinrichtung mit einer erhöhten Betätigungskraft anzusteuern, die ein Rad zu bremsen vermag, welches der mindestens einen Partikelstreuanlage zugeordnet ist.. Es ist vorstellbar, dass die Steuereinrichtung zur Betätigung der mindestens ersten und/oder zweiten Bremseinrichtung mit einer erhöhten Betätigungskraft mindestens einen zusätzlichen Krafterzeuger betätigt. Das Kraftschlussmangelsignal kann von einer Gleitschutzeinrichtung des Schienenfahrzeugs bereitgestellt werden.

Die Erfindung wird nun mit Bezug auf die begleitenden Zeichnungen anhand bevorzugter Ausführungsformen beispielhaft erläutert.

Es zeigen:
- Figur 1: schematisch ein Schienenfahrzeug mit einer Bremsanlage; und
- Figur 2: schematisch Bremskraftverteilungen in verschiedenen Bremszuständen.

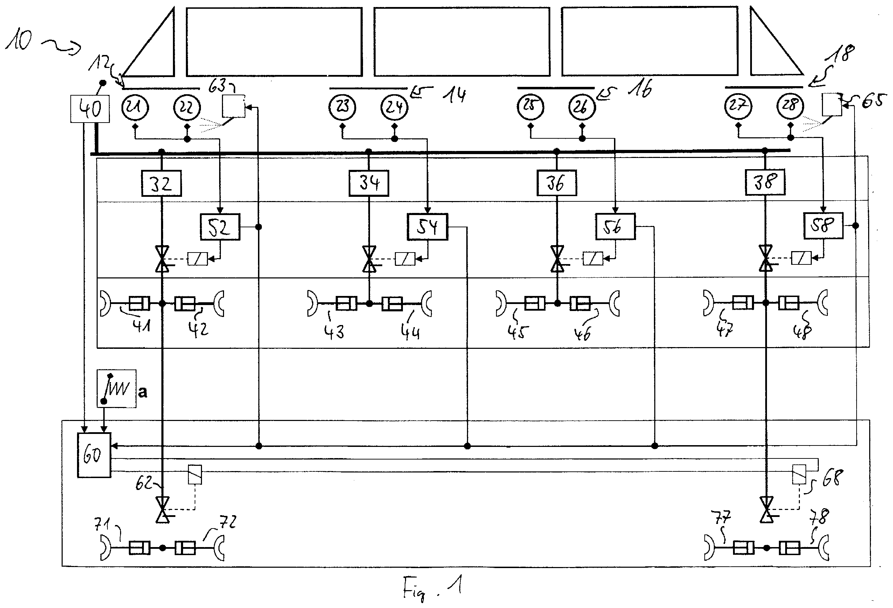

Figur 1 zeigt schematisch ein Schienenfahrzeug 10. Das Schienenfahrzeug 10 weist mehrere Wagen auf, die ein erstes Drehgestell 12, ein zweites Drehgestell 14, ein drittes Drehgestell 16 und ein viertes Drehgestell 18 umfassen Am ersten Drehgestell 12 sind Radachsen 21, 22 angeordnet. Am zweiten Drehgestell 14 sind Radachsen 23, 24 vorgesehen, während am Drehgestell 16 Radachsen 25, 26 und am Drehgestell 18 Radachsen 27, 28 vorgesehen sind. Den Radachsen eines Drehgestells sind jeweils druckbetätigte Bremseinrichtungen zugeordnet, die über ein gemeinsames Steuerventil mit Bremsdruck versorgt werden. So ist dem ersten Drehgestell 12 ein erstes Steuerventil 32, dem zweiten Drehgestell 14 ein zweites Steuerventil 34, dem dritten Drehgestell 16 ein drittes Steuerventil 36 und dem vierten Drehgestell ein viertes Steuerventil 38 zugeordnet. Die Steuerventile 32, 34, 36, 38 sind an einer Hauptdruckleitung angeschlossen, die nach Maßgabe einer Ansteuerung über eine Bremssteuerung 40 auf bekannte Art einen Steuerdruck an die Steuerventileinrichtungen 32, 34, 36 und 38 liefert. Die Steuerventileinrichtungen 32, 34, 36 und 38 sind dazu ausgebildet, basierend auf dem Steuerdruck einen Bremsdruck bereitzustellen. Alternativ kann der Bremsdruck auch durch wagenweise Bremssteuerungen bereitgestellt werden, die ein zentrales elektrisches Bremssignal empfangen und jeweils in einen Bremsdruck umsetzen können. Jeder Radachse 21-28 ist in diesem Beispiel eine Reibbremseinrichtung 41, 42, 43, 44, 45, 46, 47 beziehungsweise 48 zugeordnet, welche die jeweilige Radachse abzubremsen vermag. Jede Reibbremseinrichtung weist einen Bremsklotz und einen pneumatischen Zylinder auf, welcher als Krafterzeuger zum Umsetzen eines über die Steuerventileinrichtung 32, 34, 36 oder 38 bereitgestellten Bremsdrucks in eine Betätigungskraft dient. Es werden jeweils die Reibbremseinrichtung 41 und 42 über das Steuerventil 32, die Reibbremseinrichtung 43 und 44 über das Steuerventil 34, die Reibbremseinrichtungen 45 und 46 über das Steuerventil 36 und die Reibbremseinrichtungen 47 und 48 über das Steuerventil 38 mit Bremsdruck versorgt. Die Steuerventileinrichtungen 32, 34, 36 und 38 können rein pneumatisch oder elektronisch ansteuerbar sein, um einen gewünschten Bremsdruck bereitzustellen. Die Bremseinrichtungen 41, 42, 43, 44, 45, 46, 47, 48 sind als Teil einer Standardausrüstung eines Schienenfahrzeugs anzusehen und sind wie üblich mit Bremsdruck versorgbar. Es sind alternative Varianten zur Versorgung der Reibbremseinrichtungen mit einem Bremsdruck vorstellbar. Beispielsweise können eine Variante mit Notbremsventilen mit einer gemeinsamen Notbremsschleife oder eine wagenweise Steuerung mit individueller Sollwertvorgabe vorgesehen sein. Darüber hinaus kann anstelle einer pneumatischen Bremsanlage eine hydraulische oder elektrische oder elektromechanische Bremsanlage mit entsprechend betätigbaren Reibbremseinrichtungen und Krafterzeugern vorgesehen sein. Ferner ist jedem Drehgestell eine zu einer Gleitschutzanlage gehörende Gleitschutzeinrichtung zugeordnet. Insbesondere ist dem ersten Drehgestell 12 eine erste Gleitschutzeinrichtung 52, dem zweiten Drehgestell 14 eine zweite Gleitschutzeinrichtung 54, dem dritten Drehgestell 16 eine dritte Gleitschutzeinrichtung 56 und dem vierten Drehgestell 18 eine vierte Gleitschutzeinrichtung 58 zugeordnet. Jede Gleitschutzeinrichtung 52, 54, 56, 58 ist mit Raddrehzahlsensoren verbunden, um Raddrehzahldaten betreffend der Radachsen 21-28 zu empfangen. Basierend auf Raddrehzahldaten vermag es eine Gleitschutzeinrichtung jeweils für eine Radachse oder ein Drehgestell, einen Kraftschlussmangel festzustellen. Dazu kann eine Gleitschutzeinrichtung beispielsweise einen Radschlupf für ein oder mehrere Räder überwachen. Ferner ist ein Bremskraftmanager 60 vorgesehen, welcher es vermag mit den Gleitschutzeinrichtungen 52, 54, 56 und 58 zu kommunizieren. Über den Bremskraftmanager und/oder eine Gleitschutzeinrichtung lassen sich magnetisch ansteuerbare Ablassventile ansteuern, die jeweils zwischen einem der Steuerventile 32, 34, 36 oder 38 und den über dieses Steuerventil mit Bremsdruck versorgten Reibbremseinrichtungen angeordnet ist. Über diese Ablassventile kann ein den entsprechenden Reibbremseinrichtungen zugeführter Bremsdruck verringert werden, wenn eine zugeordnete Gleitschutzeinrichtung einen Kraftschlussmangel feststellt. Somit wird die auf die entsprechende Reibbremseinrichtung ausgeübte Betätigungskraft verringert. Dieser Vorgang kann als Auslösen der Gleitschutzeinrichtung angesehen werden. Eine Gleitschutzeinrichtung stellt bei Auslösung und/oder bei Feststellung eines Kraftschlussmangels ein entsprechendes Kraftschlussmangelsignal bereit, welches sie an den Bremskraftmanager 60 zu übermitteln vermag. Ferner ist dem ersten Drehgestell 12 eine Partikelstreuanlage 63 und dem vierten Drehgestell 18 eine Partikelstreuanlage 65 zugeordnet, wobei die Partikelstreuanlagen 63 und 65 mit dem Bremskraftmanager 60 verbunden sind. Ferner ist die Partikelstreuanlage 63 mit der ersten Gleitschutzeinrichtung 52 verbunden und die Partikelstreuanlage 65 ist mit der vierten Gleitschutzeinrichtung 58 verbunden. Jede Partikelstreuanlage kann über den Bremskraftmanager 60 und/oder über die zugeordnete Gleitschutzeinrichtung 52 oder 58 angesteuert werden, um Partikel auf die Schiene auszubringen. Dem zweiten Drehgestell 14 und dem dritten Drehgestell 16 sind keine Partikelstreuanlagen zugeordnet. Wie man in Figur 1 erkennt, sind die Partikelstreuanlagen in diesem Beispiel dazu ausgebildet, Partikel auf einen Schienenabschnitt bei der Radachse 22 oder der Radachse 28 auszubringen. Somit sind die Radachse 22 und ihre Räder der Partikelstreuanlage 63 zugeordnet, und die Radachse 28 und deren Räder der Partikelstreuanlage 65. Ferner sind am ersten Drehgestell 12 zusätzliche Reibbremseinrichtungen 71, 72 vorgesehen, die es jeweils vermögen, die Radachse 21 oder die Radachse 22 abzubremsen. Diese zusätzlichen Reibbremseinrichtungen weisen jeweils zusätzliche Krafterzeuger auf, die über das Steuerventil 32 mit einem Bremsdruck versorgbar sind. Auch am vierten Drehgestell 14 sind zusätzliche Reibbremseinrichtungen 77, 78 vorgesehen, die es jeweils vermögen, die Radachse 27 oder die Radachse 28 abzubremsen. Diese zusätzlichen Reibbremseinrichtungen 77, 78 weisen jeweils zusätzliche Krafterzeuger auf, die über das Steuerventil 38 mit einem Bremsdruck versorgbar sind. Den Reibbremseinrichtungen 71, 72 und den Reibbremseinrichtungen 77, 78 ist jeweils ein magnetisches Ventil 62, 68 zugeordnet, welches durch den Bremskraftmanager 60 ansteuerbar ist. Über ein magnetisches Ventil 62, 68 lassen sich auf entsprechende Ansteuerung durch den Bremskraftmanager 60 die zusätzlichen Reibbremseinrichtungen 71, 72 oder 77, 78 mit einem Bremsdruck versorgen. Erfasst der Bremskraftmanager 60 von einer der Gleitschutzeinrichtungen 52, 54, 56 oder 58 ein Kraftschlussmangelsignal, kann der Bremskraftmanager 60 einen zweistufigen Vorgang zur Verbesserung der Kraftschlusssituation und/oder Bremskraftsituation des Schienenfahrzeugs durchführen. In der ersten Stufe kann der Bremskraftmanager 60 die Partikelstreuanlage 63 und/oder die Partikelstreuanlage 65 dazu ansteuern, Partikel auf die Schiene auszubringen. Dadurch wird der Kraftschluss zumindest der Radachsen 22 und 28 verbessert, wodurch sich eine erhöhte Gesamtbremskraft auf die Schiene übertragen lässt. Reicht die erhöhte Gesamtbremskraft nicht aus, um die gewünschte Bremswirkung zu erzielen, kann in der zweiten Stufe der Bremskraftmanager 60 eine oder mehrere der zusätzlichen Reibbremseinrichtungen 71, 72, 77 oder 78 betätigen. Dadurch wird eine Betätigungskraft insbesondere der den Radachsen 21, 22, 27 und/oder 28 zugeordneten Reibbremseinrichtungen 41, 42, 47 und/oder 48 erhöht, denen die Partikelstreuanlage zugeordnet ist, wodurch bei diesen Radachsen eine höhere Bremskraft wirksam werden kann. Dies kann zu einer Erhöhung der Gesamtbremskraft führen. Es kann auch vorgesehen sein, dass der Bremskraftmanager 60 dazu ausgebildet ist, eines oder mehrere der Steuerventile 32, 34, 36 oder 38 dahingehend anzusteuern, dass sie einen erhöhten Bremsdruck bereitstellen, um die zugeordneten Betätigungskräfte zu erhöhen. Dadurch können sich insbesondere bei den der Partikelstreuanlage zugeordneten Radachsen 21, 22, 27 und/oder 28 erhöhte Bremskräfte einstellen. Eine derartige Ansteuerung der Steuerventile 32, 34, 36 oder 38 kann alternativ oder zusätzlich zur Betätigung zusätzlicher Reibbremseinrichtungen 71, 72, 77 oder 78 erfolgen. Alternativ kann vorgesehen sein, dass der Bremskraftmanager 60 eine oder mehrere Partikelstreuanlagen 63, 65 und eine oder mehrere zusätzlichen Reibbremseinrichtungen 71, 72, 77, 78 gleichzeitig betätigt und/oder gleichzeitig den durch mindestens ein Steuerventil 32, 34, 36 oder 38 bereitgestellten Bremsdruck erhöht. Es ist vorstellbar, dass der Bremskraftmanager 60 über einen in Figur 1 mit a bezeichneten Sensor mit Schalter dazu angesteuert werden kann, eine erhöhte Kraftschlussausnutzung anzusteuern. Dabei kann vorgesehen sein, dass einem Führer ein Signal bereitgestellt wird, dass ein Kraftschlussmangel vorliegt. Dieses Signal kann beispielsweise über eine mechanische Verzögerungserfassung bereitgestellt sein. Die Reibbremseinrichtungen 41-48 wirken jeweils auf unterschiedliche Räder oder Radachsen, die unterschiedlichen Kraftschlüssen unterliegen können. Die Reibbremseinrichtungen 41 und 71, die Reibbremseinrichtungen 42 und 72 sowie die Reibbremseinrichtungen 47 und 77 und die Reibbremseinrichtungen 48 und 78 wirken jeweils auf die gleiche Radachse. In der in Figur 1 gezeigten Variante können die jeweils einem Drehgestell 12, 14, 16 oder 18 zugeordneten Reibbremseinrichtungen mit einem gemeinsamen Bremsdruck versorgt werden. Somit können jeweils alle einem der Drehgestelle zugeordneten Reibbremseinrichtungen als Teil einer Bremseinrichtung angesehen werden. Beispielsweise kann eine erste Bremseinrichtung daher die Reibbremseinrichtungen 41, 42, 71 und 72 umfassen und eine zweite Bremseinrichtung die Reibbremseinrichtungen 43 und 44. Entsprechend kann eine dritte Bremseinrichtung die Reibbremseinrichtungen 45 und 46 umfassen und eine vierte Bremseinrichtung die Reibbremseinrichtungen 47, 48, 77 und 78. Der Bremskraftmanager 60 ist in diesem Beispiel als elektronische Steuereinrichtung ausgebildet, welche es vermag, während einer Bremsung die auf bestimmte Bremseinrichtungen wirkende Betätigungskraft zu erhöhen. Insbesondere kann die auf die erste Bremseinrichtung und/oder die auf die vierte Bremseinrichtung wirkende Betätigungskraft durch Betätigen der zusätzlichen Reibbremseinrichtungen 71, 72 und/oder 77, 78 erhöht werden. Gleichsam können diese zusätzlichen Reibbremseinrichtungen 71, 72 und/oder 77, 78 während der Bremsung hinzugeschaltet werden. Dabei kann der eingestellte Bremsdruck gleich bleiben. Die Reibbremseinrichtungen 41-48, 71, 72, 77, 78 und die Steuerventile 32, 34, 36, 38 können als Teil einer Bremsanlage des Schienenfahrzeugs 10 angesehen werden. Auch die Gleitschutzeinrichtungen 52, 54, 56, 58 und der Bremskraftmanager 60 können als Teil der Bremsanlage angesehen werden.

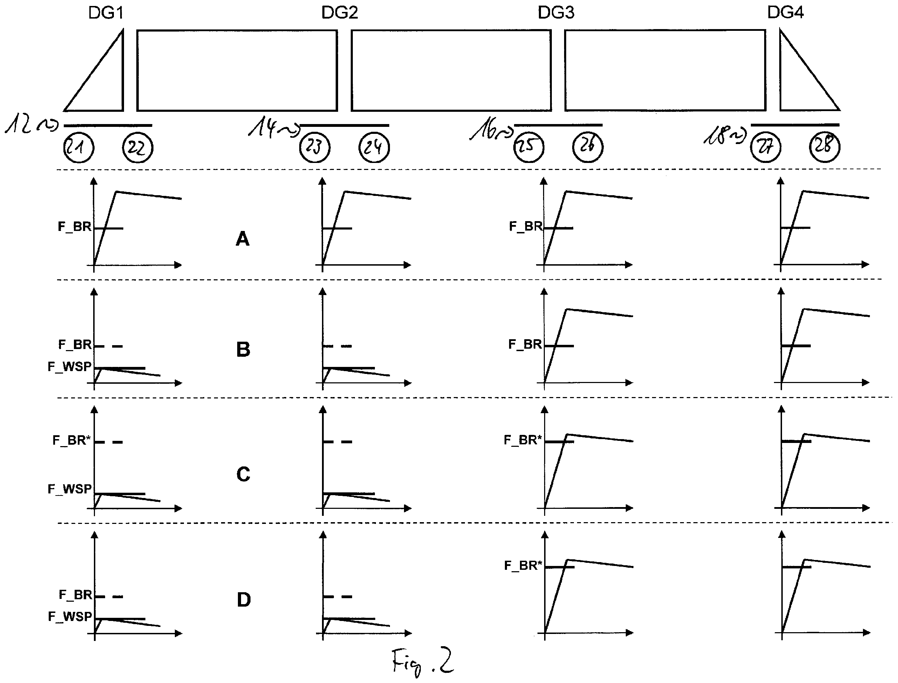

Figur 2 zeigt schematisch Bremskraftverteilungen für verschiedene beispielhafte Bremszustände eines Schienenfahrzeugs. Gezeigt sind jeweils typische Kraftschluss-Radschlupf-Kurven für die den Drehgestellen 12, 14, 16, 18 zugeordneten Radachsen. Dabei wird davon ausgegangen, dass die Schienenverhältnisse für an einem Drehgestell angeordnete Radachsen sich nicht unterscheiden. Es sind vier Zeilen A, B, C, D mit jeweils unterschiedlichen Bremszuständen dargestellt. In Zeile A ist eine Situation gezeigt, in welcher für alle Drehgestelle ein ausreichender Kraftschluss vorliegt, um eine gewünschte Bremskraft F_BR auf die Schiene zu übertragen. Es ist zu erkennen, dass in Zeile A für jedes Drehgestell noch größere Bremskräfte aufgenommen werden könnten, da das Maximum der Kraftschlusskurven jeweils oberhalb der durch die schwarze Linie dargestellte Bremskraft F_BR liegt. In Zeile B ist eine Situation dargestellt, in welcher für die Drehgestelle 12 und 14 ein niedrigerer Kraftschluss vorliegt, etwa weil die die Drehgestelle über einen nassen Schienenabschnitt fahren. In diesem Beispiel greift das Gleitschutzsystem ein und regelt die über die Bremseinrichtungen der Drehgestelle 12 und 14 ausgeübte Betätigungskraft derart herunter, dass sich jeweils eine Bremskraft ergibt, die über den niedrigen Kraftschluss aufgenommen werden kann. Die durch das Gleitschutzsystem bestimmte Bremskraft ist als F_WSP bezeichnet und durch eine gestrichelte Linie dargestellt. Für die Drehgestelle 16 und 18 liegt eine mit der Zeile A vergleichbare Situation vor. Im Zustand der Zeile B wird insgesamt weniger Bremskraft auf die Schiene gebracht, als gewünscht ist, da über die Drehgestelle 12 und 14 weniger Bremskraft als erforderlich aufgebracht wird. In Zeile C ist ein Bremszustand gezeigt, in welchem eine Steuereinrichtung für die Bremseinrichtungen der Drehgestelle 12, 14, 16 und 18 jeweils eine erhöhte Betätigungskraft ansteuert, die zu einer erhöhten Bremskraft führen kann. Die Kraftschlussbedingungen entsprechen denen der Zeile B. Für die Drehgestelle 12 und 14 sorgt wieder die Gleitschutzeinrichtung dafür, dass nur eine zur Bremskraft F_WSP umgesetzte Betätigungskraft wirksam ist. Bei den Drehgestellen 16 und 18 lassen die Kraftschlussbedingungen jedoch die Umsetzung einer erhöhten Betätigungskraft in eine erhöhte Bremskraft F_BR* zu. Entsprechend werden die Drehgestellen 16, 18 stärker gebremst als im Zustand der Zeile B und es ergibt sich insgesamt eine auf das Schienenfahrzeug wirkende höhere Bremskraft. In Zeile D ist ein Zustand gezeigt, in welchem nur diejenigen Bremseinrichtungen mit einer erhöhten Betätigungskraft betätigt sind, die Rädern zugeordnet sind, welche die erhöhte Betätigungskraft als Bremskraft auf die Schiene zu übertragen vermögen. In diesem Fall hat die Steuereinrichtung aufgrund der Auslösung der Gleitschutzeinrichtungen der Drehgestelle 12 und 14 die diesen Drehgestellen zugeordneten Bremseinrichtungen nicht mit einer erhöhten Betätigungskraft angesteuert. Dementsprechend sind die Bremseinrichtungen der Drehgestelle 12, 14 nur mit einer geringeren Betätigungskraft betätigt, welche einer Bremskraft F_BR entspräche, wenn diese auf die Schiene übertragbar wäre. Tatsächlich regeln die Gleitschutzeinrichtungen dieser Drehgestelle 12, 14 die Betätigungskraft jeweils so weit herunter, dass sie jeweils einer Bremskraft von F_WSP entspricht. Die Bremseinrichtungen der Drehgestelle 16, 18 hingegen werden mit einer erhöhten Betätigungskraft betätigt, welche der Bremskraft F_BR* entspricht. Die Gesamtbremskraft der Zeile D entspricht der der Zeile C, auch wenn in Zeile C die Bremseinrichtungen der Drehgestelle 12, 14 mit höheren Betätigungskräften angesteuert werden.

### Bezugszeichenliste

- 10: Schienenfahrzeug
- 12: erstes Drehgestell
- 14: zweites Drehgestell
- 16: drittes Drehgestell
- 18: viertes Drehgestell
- 21, 22: Radachsen
- 23, 24: Radachsen
- 25, 26: Radachsen
- 27, 28: Radachsen
- 32: Steuerventileinrichtung
- 34: Steuerventileinrichtung
- 36: Steuerventileinrichtung
- 38: Steuerventileinrichtung
- 40: Bremshebel/Bremssteuerung
- 41, 42: Reibbremseinrichtung
- 43, 44: Reibbremseinrichtung
- 45, 46: Reibbremseinrichtung
- 47, 48: Reibbremseinrichtung
- 52: Gleitschutzeinrichtung
- 54: Gleitschutzeinrichtung
- 56: Gleitschutzeinrichtung
- 58: Gleitschutzeinrichtung
- 60: Bremskraftmanager
- 62: magnetisches Ventil
- 63: Partikelstreuanlage
- 65: Partikelstreuanlage
- 68: magnetisches Ventil
- 71: zusätzliche Bremseinrichtung
- 72: zusätzliche Bremseinrichtung
- 77: zusätzliche Bremseinrichtung
- 78: zusätzliche Bremseinrichtung

## Patentansprüche

1. Steuereinrichtung (60) für eine Bremsanlage eines Schienenfahrzeugs (10),
wobei die Bremsanlage mindestens eine erste Bremseinrichtung (41, 42, 71, 72; 43, 44) und eine zweite Bremseinrichtung (45, 46; 47, 48, 77, 78) aufweist, die während einer Bremsung mit einer Betätigungskraft betätigbar sind;
wobei die erste Bremseinrichtung (41, 42, 71, 72; 43, 44) und die zweite Bremseinrichtung (45, 46; 47, 48, 77, 78) kraftschlussabhängige Bremseinrichtungen sind;
wobei die Steuereinrichtung (60) es vermag, ein Kraftschlussmangelsignal zu empfangen und/oder zu erzeugen, welches für die erste Bremseinrichtung (41, 42, 71, 72; 43, 44) einen nicht ausreichenden Kraftschluss signalisiert;
**dadurch gekennzeichnet,**
**dass** die Steuereinrichtung (60) ferner dazu ausgebildet ist, während einer Bremsung bei Vorliegen eines Kraftschlussmangelsignals die zweite Bremseinrichtung (45, 46; 47, 48, 77, 78) mit einer erhöhten Betätigungskraft zu betätigen.

2. Steuereinrichtung nach Anspruch 1, wobei die Steuereinrichtung (60) dazu ausgebildet ist, die zweite Bremseinrichtung (45, 46; 47, 48, 77, 78) mit einer erhöhten Betätigungskraft zu betätigen, während das Kraftschlussmangelsignal vorliegt.

3. Steuereinrichtung nach einem der vorhergehenden Ansprüche, wobei die Steuereinrichtung (60) dazu ausgebildet ist, eine erhöhte Betätigungskraft durch Erhöhen eines Bremsdrucks anzusteuern.

4. Steuereinrichtung nach einem der vorhergehenden Ansprüche, wobei die Steuereinrichtung (60) dazu ausgebildet ist, bei Vorliegen des Kraftschlussmangelsignals mindestens eine Partikelstreuanlage (63, 65) anzusteuern, um kraftschlusserhöhende Partikel auf eine Schiene auszubringen.

5. Steuereinrichtung nach Anspruch 4, wobei die Steuereinrichtung (60) dazu ausgebildet ist, eine Bremseinrichtung (41, 42; 47, 48; 71, 72, 77, 78) mit einer erhöhten Betätigungskraft anzusteuern, die ein Rad zu bremsen vermag, welches der mindestens einen Partikelstreuanlage (63, 65) zugeordnet ist.

6. Steuereinrichtung nach einem der vorhergehenden Ansprüche, wobei die Steuereinrichtung (60) dazu ausgebildet ist, zur Betätigung der zweiten Bremseinrichtung (45, 46; 47, 48, 77, 78) mit einer erhöhten Betätigungskraft mindestens einen zusätzlichen Krafterzeuger (77, 78) zu betätigen.

7. Steuereinrichtung nach einem der vorhergehenden Ansprüche, wobei das Kraftschlussmangelsignal von einer Gleitschutzeinrichtung (52, 54, 56, 58) des Schienenfahrzeugs (10) bereitgestellt ist.

8. Bremsanlage für ein Schienenfahrzeug mit einer ersten und zweiten kraftschlussabhängigen Bremseinrichtung (41-48; 71, 72, 77, 78) und einer Steuereinrichtung (60) nach einem der Ansprüche 1 bis 7, wobei die erste und zweite Bremseinrichtung (41-48; 71, 72, 77, 78) nach Maßgabe der Steuereinrichtung (60) mit einer Betätigungskraft betätigbar sind.

9. Schienenfahrzeug (10) mit einer Bremsanlage nach Anspruch 8 und/oder einer Steuereinrichtung (60) nach einem der Ansprüche 1 bis 7.

10. Verfahren zum Steuern einer Bremsanlage eines Schienenfahrzeugs (10) durch eine Steuereinrichtung (60), wobei die Bremsanlage mindestens eine erste Bremseinrichtung (41, 42, 71, 72; 43, 44) und eine zweite Bremseinrichtung (45, 46; 47, 48, 77, 78) umfasst, wobei die erste und die zweite Bremseinrichtung (41-48; 71, 72, 77, 78) kraftschlussabhängige Bremseinrichtungen sind, die während einer Bremsung mit einer Betätigungskraft betätigbar sind, mit dem Schritt:
Empfangen und/oder Erzeugen, durch die Steuereinrichtung (60), eines Kraftschlussmangelsignals, welches für die erste Bremseinrichtung (41, 42, 71, 72; 43, 44) einen nicht ausreichenden Kraftschluss signalisiert;
**gekennzeichnet durch** den Schritt:
Betätigen, durch die Steuereinrichtung, während einer Bremsung, bei Vorliegen eines Kraftschlussmangelsignals, der zweiten Bremseinrichtung (45, 46; 47, 48, 77, 78) mit einer erhöhten Betätigungskraft.

## Claims

1. A control device (60) for a brake system of a rail vehicle (10), in which the brake system has at least one first braking device (41, 42, 71, 72; 43, 44) and one second braking device (45, 46; 47, 48, 77, 78), which can be actuated with an actuating force during braking;
the first braking device (41, 42, 71, 72; 43, 44) and the second braking device (45, 46; 47, 48, 77, 78) being adhesion-dependent braking devices;
the control device (60) being capable of receiving and/or generating an adhesion deficiency signal which indicates insufficient adhesion for the first braking device (41, 42, 71, 72; 43, 44);
**characterised in that**
the control device (60) is furthermore designed to actuate the second braking device (45, 46; 47, 48, 77, 78) with an increased actuating force during braking when an adhesion deficiency signal is present,

2. A control device according to claim 1, in which the control device (60) is designed to actuate the second braking device (45, 46; 47, 48, 77, 78) with an increased actuating force when the adhesion deficiency signal is present.

3. A control device according to any of the preceding claims, in which the control device (60) is designed to activate an increased actuating force by increasing a brake pressure.

4. A control device according to any of the preceding claims, in which the control device (60) is designed to activate at least one particle scattering system (63, 65) when the adhesion deficiency signal is present in order to discharge adhesionincreasing particles onto a rail.

5. A control device according to claim 4, in which the control device (60) is designed to activate a braking device (41, 42; 47, 48; 71, 72, 77, 78) with an increased actuating force that is capable of braking a wheel assigned to the at least one particle scattering system (63, 65).

6. A control device according to any of the preceding claims, in which the control device (60) is designed to actuate at least one additional force generator (77, 78) in order to actuate the second braking device (45, 46; 47, 48, 77, 78) with an increased actuating force.

7. A control device according to any of the preceding claims, in which the adhesion deficiency signal is supplied by a wheel-slide protection device (52, 54, 56, 58) of the rail vehicle (10).

8. A brake system for a rail vehicle having a first and a second adhesion-dependent braking device (41-48; 71, 72, 77, 78) and a control device (60) according to any of claims 1 to 7, in which it is possible to actuate the first and second braking devices (41-48; 71, 72, 77, 78) with an actuating force in accordance with the control device (60).

9. A rail vehicle (10) having a brake system according to claim 8 and/or a control device (60) according to any of claims 1 to 7.

10. A method for controlling a brake system of a rail vehicle (10) by means of a control device (60), in which the brake system comprises at least one first braking device (41, 42, 71, 72; 43, 44) and one second braking device (45, 46; 47, 48, 77, 78), the first and second braking devices (41-48; 71, 72, 77, 78) being adhesion-dependent braking devices which can be actuated with an actuating force during braking, and comprising the following step:
reception and/or generation by the control device (60) of an adhesion deficiency signal which indicates insufficient adhesion for the first braking device (41, 42, 71, 72; 43, 44);
**characterised by** the following step:
actuation of the second braking device (45, 46; 47, 48, 77, 78) by the control device during braking with an increased actuating force when an adhesion deficiency signal is present.

## Revendications

1. Dispositif (60) de commande d'un système de frein d'un véhicule (10) ferroviaire,
dans lequel le système de frein a au moins un premier dispositif (41, 42, 71, 72; 43, 44) et un deuxième dispositif (45, 46; 47, 48, 77, 78) de frein, qui, pendant un freinage, peuvent être actionnés par une force d'actionnement;
dans lequel le premier dispositif (41, 42, 71, 72; 43, 44) de frein et le deuxième dispositif (45, 46; 47, 48, 77, 78) de frein sont des dispositifs de frein, qui dépendent de l'application d'une force;
dans lequel le dispositif (60) de commande permet de recevoir et/ou de produire un signal de défaut d'application d'une force, qui signale une application de force insuffisante pour le premier dispositif (41, 42, 71, 72; 43, 44) de frein;
**caractérisé**
**en ce que** le dispositif (60) de commande est constitué, en outre, pour actionner, pendant un freinage en présence d'un signal de défaut d'application d'une force, le deuxième dispositif (45, 46; 47, 48, 77, 78) de frein par une force d'actionnement plus grande.

2. Dispositif de commande suivant la revendication 1, dans lequel le dispositif (60) de commande est constitué pour actionner le deuxième dispositif (45, 46; 47, 48, 77, 78) de frein par une force d'actionnement plus grande pendant qu'il y a le signal de défaut d'application d'une force.

3. Dispositif de commande suivant l'une des revendications précédentes, dans lequel le dispositif (60) de commande est constitué pour commander une force d'actionnement plus grande par augmentation d'une pression de frein.

4. Dispositif de commande suivant l'une des revendications précédentes, dans lequel le dispositif (60) de commande est constitué pour, en présence du signal de défaut d'application d'une force, commander au moins un système (63, 65) de dispersion de particules, afin de mettre des particules, augmentant l'application de force, sur un rail.

5. Dispositif de commande suivant la revendication 4, dans lequel le dispositif (60) de commande est constitué pour commander un dispositif (41, 42; 47, 48; 71, 72, 77, 78) de frein par une force d'actionnement plus grande, qui permet de freiner une roue, qui est associée à au moins une installation (63, 65) de dispersion de particules.

6. Dispositif de commande suivant l'une des revendications précédentes, dans lequel le dispositif (60) de commande est constitué pour actionner, pour l'actionnement du deuxième dispositif (45, 46; 47, 48, 77, 78) de frein par une force d'actionnement plus grande, au moins un producteur (77, 78) supplémentaire de force.

7. Dispositif de commande suivant l'une des revendications précédentes, dans lequel le signal de défaut d'application d'une force est mis à dispositif par un dispositif (52, 54, 56, 58) anti-enrayeur du véhicule (10) ferroviaire.

8. Système de frein d'un véhicule ferroviaire comprenant un premier et un deuxième dispositifs (41 à 48; 71, 72, 77, 78) de frein, qui dépend de l'application d'une force et un dispositif (60) de commande suivant l'une des revendications 1 à 7, le premier et le deuxième dispositifs (41 à 48; 71, 72, 77, 78) de frein pouvant être actionnés par une force d'actionnement en fonction du dispositif (60) de commande.

9. Véhicule (10) ferroviaire ayant un système de frein suivant la revendication 8 et/ou un dispositif (60) de commande suivant l'une des revendications 1 à 7.

10. Procédé de commande d'un système de frein d'un véhicule (10) ferroviaire par un dispositif (60) de commande, le système de frein ayant au moins un premier dispositif (41, 42, 71, 72; 43, 44) de frein et un deuxième dispositif (45, 46; 47, 48, 77, 78) de frein, le premier et le deuxième dispositifs (41 à 48; 71, 72, 77, 78) de frein étant des dispositifs de frein, qui dépendent de l'application d'une force et qui, pendant un freinage, peuvent être actionnés par une force d'actionnement, comprenant le stade :
réception et/ou production, par le dispositif (60) de commande, d'un signal de défaut d'application d'une force, qui signale une application de force insuffisante pour le premier dispositif (41, 42, 71, 72; 43, 44) de frein;
**caractérisé par** le stade :
actionnement, par le dispositif de commande, pendant un freinage, en présence d'un signal de défaut d'application d'une force, du deuxième dispositif (45, 46; 47, 48, 77, 78) de frein par une force d'actionnement plus grande.
